# EUROPEAN PATENT APPLICATION

(11) **EP 3 985 381 A1**
(43) Date of publication of application: **20.04.2022**
(21) Application number: 20202399.0
(22) Date of filing: 16.10.2020
(51) Int. Cl.: G01N 21/47, G01N 21/62, G01Q 60/12

(54) **OPTICAL NEAR-FIELD ELECTRON MICROSCOPY**

(71) Applicant: Universität Wien, 1010 Vienna (AT)
(72) Inventor: Juffman, Thomas, 1010 Wien (AT); Marchand, Raphaël, 1010 Wien (AT)
(74) Representative: Bardehle Pagenberg Partnerschaft mbB Patentanwälte Rechtsanwälte

(57) **Abstract**

The present invention relates to a hybrid imaging technique known as Optical Nearfield Electron Microscopy (ONEM), that combines the non-invasiveness of probing with light with the spatial resolution offered by electron optics. The present invention provides a method for nanoscale imaging of samples comprising the steps of: focusing light onto a sample, wherein the sample is in close proximity to an ultra-thin vacuum-liquid interface; converting, in the near field, spatial light distribution into a spatially varying electron flux comprising photoelectrons; and imaging the emitted photoelectrons using low-energy electron optics.

## Description

### Technical Field

The present invention relates to a hybrid imaging technique known as Optical Near-field Electron Microscopy (ONEM), that combines the non-invasiveness of probing with light with the spatial resolution offered by electron optics.

### Background

Observing proteins interacting with each other has been a dream for decades for molecular biologists. However, it remains a great challenge to image single molecules with nanometer spatial resolution and millisecond time resolution, without labelling, without sample damage and without limitations in observation time. Similar limitations also occur in liquid phase electrochemistry experiments, e.g. when studying the solid-electrolyte interface in batteries or localised corrosion. Such experiments are typically performed in liquid cell transmission electron microscopes (TEM) and are severely affected by electron dose induced damage and related artefacts.

### Summary

The present invention solves the problems of the prior art and is defined by the features of the independent claims. Preferred embodiments are defined by the features of the dependent claims.

According to the solution of the present invention, a hybrid imaging technique, Optical Near-field Electron Microscopy (ONEM), is provided that combines the non-invasiveness of probing with light with the spatial resolution offered by electron optics.

According to first aspect of the present invention a method for nanoscale imaging of samples (e.g. proteins or metallic nanoparticles) is provided. The method comprises focusing light onto a sample, wherein the sample is in close proximity to an ultra-thin vacuum-liquid interface. The method then involves converting, in the near field, spatial light distribution into a spatially varying electron flux comprising photoelectrons and subsequently imaging the emitted photoelectrons using low-energy electron optics. The method advantageously enables damage-free imaging at nanoscale resolution and high frame rates over extended periods. By imaging the emitted photoelectrons, a read-out of the nanometric optical near fields is obtained non-invasively and at high spatial and temporal resolution. Furthermore, the method of the present invention improves resolution performance of a diffraction-limited optical imaging system, such as a microscope or camera used when implementing the present invention.

In a preferred embodiment of the first aspect of the present invention, the light is visible light. By using visible light, the sample can advantageously be illuminated without damaging it. In another embodiment, infrared light can be used.

In a further preferred embodiment, the light has a photon energy value (hv) of less than 3 eV. Using light with values less than 3 eV is preferable as it can be used to illuminate the sample without damaging it. Preferably, the photon energy value is less than 2 eV. In addition to preventing damage to the sample, using light with values less than 2 eV improves resolution.

Another preferred embodiment further comprises detecting the light emitted from the sample, wherein the light is emitted through scattering or fluorescence. The conversion of light into rays of electrons enables an electron read-out to be obtained based on electrons which do not originate from the sample itself and therefore advantageously do not cause damage to it.

According to a further embodiment, the ultra-thin vacuum-liquid interface is a liquid cell. Liquid cells have been developed for the high vacuum requirements of TEM, and are also compatible with the LEEM sample environment implemented according to a preferred embodiment of the present invention. On the other hand, ONEM liquid cells do not necessarily need to be ultra-thin, as it is light (and not electrons) that passes through the liquid. This beneficially allows for more flexibility and will enable many experiments that are difficult to realise in ultrathin liquid cells.

According to yet another embodiment, the step of converting is performed with a thin layer of low-work-function photocathode, PC, material arranged on or in close proximity to the ultra-thin vacuum-liquid interface. As with detecting the emitted light, this advantageously enables an electron read-out to be obtained based on electrons which do not originate from the sample itself and therefore advantageously do not cause damage to it. In order to reach sub-optical-wavelength resolution the distance of the object to the photo-cathode layer needs to be much shorter than the optical wavelength. Ultra-thin, highly efficient photocathodes have just been developed, and have been shown to be smooth on the nanometer scale. Most importantly, these photocathodes are efficient at visible light excitation, for example visible e.g. green light excitation, which is not damaging to biological samples. The PC material preferably has a work function of less than 2 eV. Since the PC has a small work function, electrons are exclusively created in the PC, and the sample is never exposed to electrons or to an electron beam. The shorter the distance between sample and PC, the better the resolution of the optical microscopy. If the distance is shorter than the wavelength of the illumination, ONEM represents a label-free technique for beating the optical diffraction limit. In a preferred embodiment, the distance is less than 10 nm, thus offering a resolution better than 10 nm.

According to a further embodiment, the emitted photoelectrons are imaged using scanning probe microscopy techniques, e.g. by photo-assisted tunneling microscopy. In this implementation the scanning probe microscope would replace the low-energy electron microscope described in detail below. Although imaging might be slower due to the time it takes to scan the probe, the system of the present invention can be realised in a more compact, and cheaper, setup.

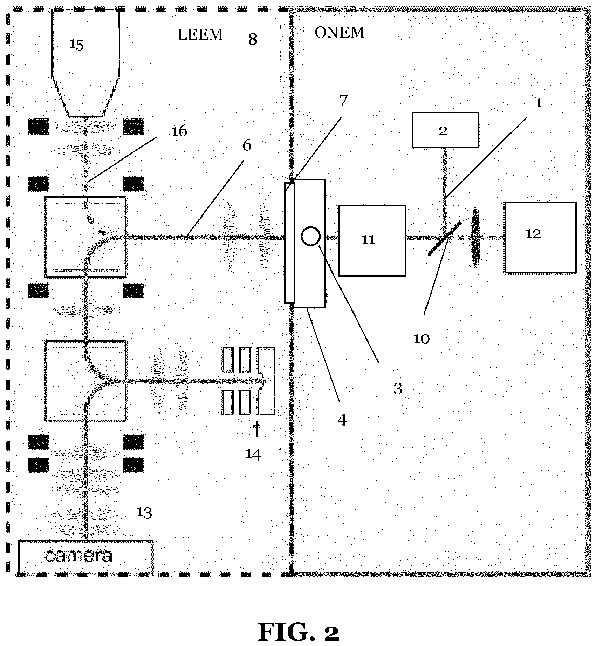

In a second aspect of the present invention, a system for nanoscale imaging of samples is provided. As shown in the preferred embodiment in Fig. 2, the system comprises a light source such as a laser to generate light. An objective is configured to focus the light onto a sample, wherein the sample is in close proximity to an ultra-thin vacuum-liquid interface.
Means are provided for converting, in the near field, spatial light distribution into a spatially varying electron flux comprising photoelectrons and subsequently for imaging the emitted photoelectrons using low-energy electron optics.

In a third aspect of the present invention, a computer-implemented storage medium with instructions stored thereupon is provided which, when executed by a computer, cause the method steps of the first aspect (and any of its preferred embodiments) to be performed.

The present invention and its embodiments advantageously enables damage-free imaging at 3 nm resolution and high frame rates (up to kHz), and over extended periods.

### Description of the drawings

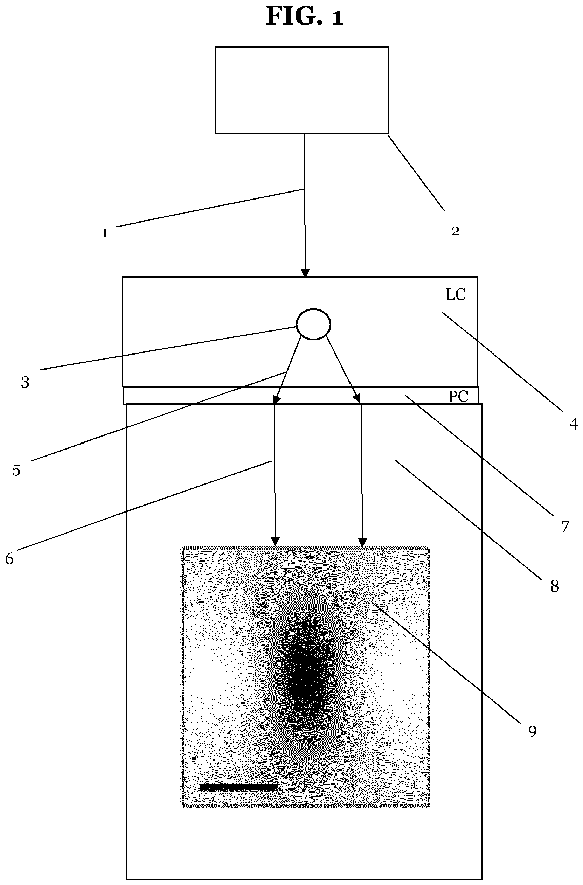

Figure 1 illustrates a preferred embodiment of a method and apparatus for Optical Near-field Electron Microscopy (ONEM) according to the present invention wherein visible (e.g. green) light 1 generated by a light source such as a laser 2 illuminates a sample 3 (e.g. a protein) in a liquid cell (LC) 4.

The resulting optical near-field interference pattern 5 is converted into a spatially varying electron flux 6 via a photo cathode (PC) 7 in a vacuum 8 to generate an electron image 9 of the emitted photons in the near field. The spatial information is retrieved using electron microscopy (preferably aberration-corrected electron microscopy).

The grey-scale image 9 is a simulation of the near-field intensity distribution caused by a spherical protein. The scale bar denotes 5 nm in this preferred embodiment and the image contrast amounts to 1.4 % for a 50 kDa protein at 5 nm distance from the PC (see below for more detailed description).

Figure 2 shows a schematic ONEM apparatus set-up according to a preferred embodiment of the present invention. Proteins 3 in a liquid cell 4 are illuminated (and optically inspected) with a CW laser 2 via a mirror 10 and objective 11, wherein the reflection from the LC may be detected by a camera 12. Photoelectrons 6 generated in the photocathode 7 at the backside of the liquid cell 4 are imaged in an aberration-corrected LEEM 8. In order to achieve this, the electrons 6 travel past a set of lenses 13 and an aberration-correcting mirror 14. The electron gun 15 at the top is off in ONEM, but it can be turned on to perform LEEM experiments, e.g. on the photocathode material (dashed line 16).

### Example of preferred embodiment

Several techniques have been successful in nanoscale imaging, most notably super-resolution microscopy, atomic force microscopy, and cryo-electron microscopy. ONEM according to the present invention is complementary to all these techniques, as it harnesses the best of two worlds: firstly, the non-invasiveness of probing a sample with light, and secondly, the high spatial and temporal resolution offered by electron optical read-out.

A proposed method according to a preferred embodiment of the present invention is illustrated in Fig. 1, wherein green light is focused onto a sample (e.g. a protein), which is close to an ultra-thin vacuum-liquid interface (e.g. liquid cell LC). The sample scatters light elastically, leading to nanometric features in the near field.

This spatial light distribution is then converted, still in the near-field, into a spatially varying electron flux via the photo-electric effect within a thin layer of low-work-function photocathode (PC) material. The emitted photoelectrons are then imaged using aberration-corrected low-energy electron optics. The electrons therefore provide a read-out of the nanometric optical near fields.

Crucially, according to the preferred embodiment of the present invention, non-damaging green light (*hv* = 2.3 eV) can be used to illuminate the sample, as the PC has a small work function of less than 2 eV. Electrons are thus exclusively created in the PC, and the sample is never exposed to electrons or to an electron beam.

State-of-the-art low energy electron microscopes (LEEM) have demonstrated < 2 nm resolution and a field of view up to 75 µm. Furthermore, a resolution < 3 nm has been predicted for photo-electron emission microscopy (PEEM) on such aberration-corrected instruments.

The ONEM system according to the preferred embodiment of the present invention will hence be based on an advanced LEEM-PEEM system (see Fig. 2). However, in distinct contrast to PEEM, the electrons in ONEM according to the preferred embodiment of the present invention do not originate from the sample itself, and therefore do not cause damage.

Notably, ONEM measurements can be correlated with an optical read-out of scattered or fluorescence light (with appropriate labelling) for benchmarking. Using light as the primary probe, the present invention enables having the full optical toolbox at one's disposal (wavelength, polarisation, CW or pulsed sources, pump-probe, holographic illumination, etc).

ONEM according to the present invention represents a fundamentally new microscopy technique that exploits light and electron optics in an unprecedented way, and according to their respective strengths: light for non-invasive probing, electrons for high spatial resolution read-out. Phenomena unmeasurable in electron beams (due to beam-inflicted damage) hence become measurable.

Furthermore, ONEM according to the present invention offers unique measurement opportunities on the dynamics of various processes, by allowing the use of liquid cells. The latter avoids the problem of having to either freeze samples or requiring them to be in a vacuum.

As such, ONEM according to the invention will offer 3 nm resolution and up to kHz temporal resolution for dynamic studies over extended periods of time. It can operate in a label-free way, characterising the refractive index distributions of a sample (e.g. for protein mass determination), or use labels (e.g. metal nanoparticles) bound to an object of interest.

Crucially the labels are not fluorescent, allowing for extended observation times without blinking, bleaching, or photo-toxicity. For metallic nanoparticles, optical (plasmonic) properties can be probed in a liquid environment, which can yield information that is essential for bio-optical sensor design and understanding.

The combination of ONEM with liquid cells according to a preferred embodiment of the invention will further enable electrochemical experiments that will yield novel insights into the physics and chemistry at interfaces.

Finally, the exploration of tethered bilayers using ONEM according to the invention will allow the investigation of biological systems, offering information on protein clustering and dynamics within membranes. ONEM will thus extend the toolbox of biologists and material scientists into an unexplored parameter regime, making the unmeasurable measurable, and the invisible visible.

Future projects will address photonic bandgap materials, as well as the use of ONEM to address short and ultrashort timescales, employing pump-probe techniques to excite and probe a sample of interest.

Concept Harnessing the spatial resolution of electron microscopy in a damage-free imaging scheme has been a dream for decades. While many groups worldwide are working on reducing dose-induced electron damage, the combination of light and electron optics introduced in ONEM according to the present invention is unique since ONEM is indeed damage-free.

In order to mitigate photon-induced damage, low-work-function photocathodes can be efficiently excited with green light, and thus at photon energies significantly below the absorption band of most proteins: In a preferred exemplary implementation of the invention, a 50 kDa protein is placed in water and at 5 nm distance from the photocathode. Near-field simulations predict an image contrast of ∼1.4% (Fig. 1, simulated using MNPBEM toolbox).

Shot-noise limited detection will require ∼5 x 10³ photoelectrons per spatially resolved area. Assuming a photoelectron conversion efficiency of 3%, and unity detection efficiency, this will require illuminating the protein with ∼1.6 x 105 photons. For a frame rate of 1 kHz and 5 nm resolution, the required illumination intensity is ∼2.5 µW/µm², well below intensities reported in e.g. interferometric scattering microscopy (iScat) using light at 405 nm. This is not surprising: Both iScat and ONEM are shot-noise limited.

While iScat detects scattered light more efficiently (no photocathode), this is by far compensated by the narrower point spread function in ONEM, which increases contrast and resolution. In ONEM according to the present invention , the photocathode material will have a work-function much lower than the work function of its liquid cell support (1.9 eV for bialkali antimonide K2CsSb, 1.3eV for cesiated graphene, versus 4.4eV for the few-layer graphene support). The photocathode will be excited with light at 532 nm (*hv* =2.3 eV), such that the energy of the created photoelectrons will be insufficient to overcome the internal potential barrier. The sample will never be exposed to electrons.

The present invention may be used for studies in separate application domains. These include, but are not limited to:
1) The imaging of optical near-fields for the study of plasmonics. These studies can be done in a liquid environment, in a gas atmosphere, or in vacuum.
2) The imaging of chemical reactions at interfaces.
3) The imaging of biological specimens, their structural arrangement and dynamics, including, but not limited to
   a. Proteins attached to interfaces
   b. Proteins in lipid bilayers.
   c. Protein distribution within the cell wall of living cells.
   d. Surface protrusions of viruses.

## Claims

1. A method for nanoscale imaging of samples comprising the steps of:
focusing light onto a sample, wherein the sample is in close proximity to an ultra-thin vacuum-liquid interface;
converting, in the near field, spatial light distribution into a spatially varying electron flux comprising photoelectrons;
imaging the emitted photoelectrons using low-energy electron optics.

2. The method of claim 1 wherein the light is visible light.

3. The method of claim 1 wherein the light is infrared light

4. The method of claims 1 or 2, wherein the light has a photon energy value (hv) of less than 3 eV.

5. The method of claim 4, wherein the photon energy value is less than 2 eV.

6. The method of any of the preceding claims, further comprising detecting the light emitted from the sample, wherein the light is emitted through scattering or fluorescence.

7. The method of any of the preceding claims, wherein the ultra-thin vacuum-liquid interface is a liquid cell.

8. The method of any of the preceding claims, wherein the step of converting is performed with a thin layer of low-work-function photo cathode, PC, material arranged in close proximity to the ultra-thin vacuum-liquid interface.

9. The method of claim 8, wherein the PC material has a work function of less than 2 eV.

10. The method of claim 1, wherein imaging is done using a scanning probe microscopy techniques.

11. A system for nanoscale imaging of samples comprising:
a light source to generate light;
an objective configured to focus the light onto a sample, wherein the sample is in close proximity to an ultra-thin vacuum-liquid interface;
means for converting, in the near field, spatial light distribution into a spatially varying electron flux comprising photoelectrons,
imaging the emitted photoelectrons using low-energy electron optics.

12. A computer-implemented storage medium with instructions stored thereupon which, when executed by a computer, cause the method steps of claim 1 to be performed.
